# EUROPÄISCHE PATENTSCHRIFT

(11) **EP 1 756 459 B1**
(45) Veröffentlichungstag und Bekanntmachung des Hinweises auf die Patenterteilung: **26.11.2008**
(21) Anmeldenummer: 05753161.8
(22) Anmeldetag: 02.06.2005
(51) Int. Cl.: F16L 19/065

(54) **ROHRVERBINDUNGSVORRICHTUNG**
PIPE CONNECTING DEVICE
DISPOSITIF DE RACCORD DE TUYAUTERIE

(30) Priorität: 15.06.2004 DE 102004028571
(43) Veröffentlichungstag der Anmeldung: 28.02.2007
(73) Patentinhaber: GARDENA Manufacturing GmbH, 89079 Ulm (DE)
(72) Erfinder: SCHIEDT, Christoph, 88483 Burgrieden (DE)
(86) Internationale Anmeldenummer: PCT/EP2005/005929
(87) Internationale Veröffentlichungsnummer: WO 2005/124216

(56) Entgegenhaltungen:
- FR-A- 2 361 594

## Beschreibung

Die Erfindung betrifft eine Rohrverbindungsvorrichtung mit einem zwischen einem Grundkörper und einem Spannkörper angeordneten Klemmring, welcher in einer Klemmstellung mit einer konischen Anlagefläche an einer konischen Gegenfläche von Grundkörper oder Spannkörper anliegt und dabei eine radiale Klemmung eines durch die Ringöffnung geführten Rohres bewirkt. Der Klemmring ist an einer Stelle aufgetrennt und wird durch ein aufgestecktes Rohr leicht aufgeweitet und liegt mit geringer elastischer Verspannung an der Rohraußenwand an.

Bei einer bekannten derartigen Rohrverbindungsvorrichtung ist der Spannkörper durch eine Überwurfmutter gebildet, welche auf dem Grundkörper aufschraubbar ist. Die bekannte Rohrverbindung ist zum Entfernen eines eingesetzten Rohres typischerweise vollständig zu öffnen, was für den Benutzer mit verschiedenen Unannehmlichkeiten verbunden ist.

Der vorliegenden Erfindung liegt daher die Aufgabe zugrunde, eine für den Benutzer einfacher handhabbare Rohrverbindungsvorrichtung anzugeben.

Aus der FR-A-2 361 594 ist eine Rohverbindungsvorrichtung bekannt, die alle Merkmale des Oberbegriffs des Anspruchs 1 beinhaltet.

Die Erfindung ist im kennzeichenden Teil des unabhängigen Anspruchs 1 beschrieben. Die abhängigen Ansprüche enthalten vorteilhafte Ausgestaltungen und Weiterbildungen der Erfindung.

Die erfindungsgemäße Rohrverbindungsvorrichtung sieht vor, dass Lösevorrichtungen zwischen einer ersten und einer zweiten Stellung verstellbar sind und dabei in der ersten Stellung eine flächige Anlage der konischen Anlagefläche des Klemmrings an der konischen Gegenfläche verhindern, in einer zweiten Stellung hingegen eine solche flächige Anlage, insbesondere auch unter achsialer Andrückkraft ermöglichen. Eine im wesentlichen punktuelle oder linienförmige einseitige Anlage der konischen Flächen kann auch in der ersten Stellung der Lösevorrichtung auftreten, solange hieraus keine Klemmung des Rohres im Klemmring resultiert. Insbesondere können die Lösevorrichtungen in der ersten Stellung eine achsiale Verschiebung von konischer Anlagefläche gegen die Gegenfläche im Vergleich zu deren relativer achsialer Position in der Klemmstellung erzwingen und aufrechterhalten.

Vorteilhafterweise enthalten die Lösevorrichtungen eine erste und eine zweite Stirnfläche, welche in achsialer Richtung einander zuweisend ausgerichtet und z. B. relativ zueinander um die Rohrlängsachse verdrehbar sind und gegenüber einer senkrecht zur Rohrlängsachse verlaufenden Referenzebene nicht ebene Reliefstrukturen mit Vorsprüngen und/oder Vertiefungen in achsialer Richtung aufweisen: Die Reliefstrukturen sind ist insbesondere derart gestaltet, dass in einer ersten Stellung als Endstellung die Stirnflächen nicht aneinander liegen, und zumindest bei Einwirkung einer achsialen Kraft auf das Rohr in Ausziehrichtung der Klemmring über flächiges Anliegen der konischen Anlagefläche und deren Gegenfläche zwischen Spannkörper und Grundkörper achsial verspannt ist und in einer zweiten Stellung als Freigabestellung die Stirnflächen zumindest abschnittsweise oder punktuell aneinanderliegen und das flächige Anliegen von Anlagefläche und Gegenfläche durch Erzwingen eines geringen achsialen Abstands verhindern. Während in der Endstellung der Klemmring aufgrund des Anliegens der konischen Flächen und der daraus bei Einwirken einer ausziehenden Kraft resultierenden radialen Verspannung das Rohr radial klemmend festhält, ist der Klemmring in der Freigabestellung bis auf eine leichte Vorspannung weitgehend radial spannungsfrei, so das ein angestecktes Rohr ausgezogen werden kann. Insbesondere wird durch den erzwungenen achsialen Abstand eines eingesetzten Rohrs die konischen Flächen aneinanderliegen und dadurch wieder eine Klemmung des Rohrs bewirken.

Ein Wechsel zwischen der ersten und der zweiten Stellung der Stirnflächen erfolgt vorzugsweise durch relatives Verdrehen der Stirnflächen zueinander. Der Drehwinkel zwischen der ersten und der zweiten Stellung beträgt vorteilhafterweise weniger als 180°, insbesondere weniger als 120°, vorzugsweise weniger als 90°. Vorteilhafterweise liegen in der zweiten Stellung die erste und zweite Stirnfläche an wenigstens drei um die Rohrlängsachse winkelversetzten Stellen aneinander an.

Zusätzlich kann ein in achsialer Richtung elastisch verformbares Federelement, beispielsweise ein gewellter Federring vorgesehen sein, welcher eine achsiale Verspannung auf den Federring in Richtung einer flächigen Anlage der konischen Flächen bewirkt. Diese Wirkung eines solchen Federelements ist in der zweiten Stellung durch die aneinander liegenden Strukturen außer Kraft.

Vorteilhafterweise ist der Klemmring oder ein die erste Stirnfläche aufweisender Ring drehfest in dem Grundkörper gehalten. Die zweite Stirnfläche ist vorteilhafterweise an einem drehbaren Spannkörper, insbesondere einer Überwurfmutter oder einem in dem Spannkörper drehfest gehaltenen Ring ausgebildet. Es kann auch ein separat betätigbarer Ring mit einer der beiden Stirnflächen vorgesehen sein.

Die Erfindung ist nachfolgend an einem bevorzugten Beispiel unter Bezugnahme auf die Abbildungen noch eingehend veranschaulicht. Dabei zeigt:
- Fig. 1: ein Schnittbild einer erfindungsgemäßen Vorrichtung in Klemmstellung,
- Fig. 2: eine Abwicklung gegenüber stehender Stirnflächen zu Fig. 1,
- Fig. 3: eine achsiale Ansicht des Klemmkörpers zu Fig. 1,
- Fig. 4: ein Schnittbild der Vorrichtung nach Fig. 1 in Lösestellung,
- Fig. 5: eine Abwicklung gegenüber stehender Stirnflächen zu Fig. 4,
- Fig. 6: eine achsiale Ansicht des Klemmkörpers zu Fig. 4.

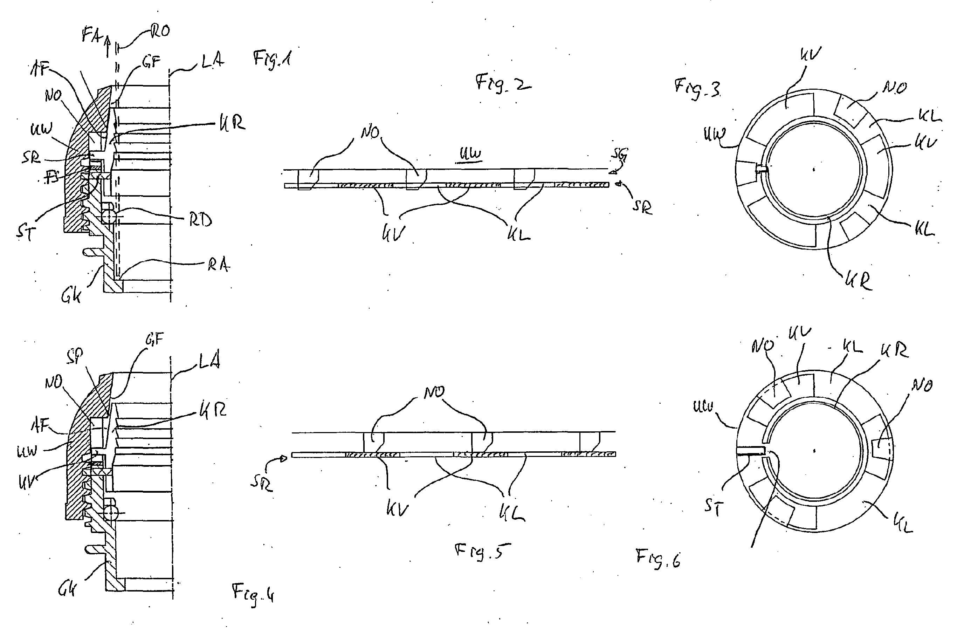

Bei der in Fig. 1 im Querschnitt mit einer Schnittebene durch die Längsachse LA eines eingesetzten Rohres RO verlaufender Schnittebene ist ein Grundkörper GK vorgesehen, auf welchen eine Überwurfmutter UW aufschraubbar ist. In Richtung der Längsachse LA zwischen Überwurfmutter und Grundkörper liegt ein Klemmring KR, welcher dem mit unterbrochener Linie angedeutetem Rohr RO zugewandt eine Zahnstrüktur aufweist. Im Grundkörper ist ein Dichtring RD vorgesehen, welcher die Rohraußenwand gegen den Grundkörper abdichtet. Die Einstecktiefe des Rohres in den Grundkörper kann durch einen nach innen ragenden Anschlag RA des Grundkörpers begrenzt sein.

Der Klemmring KR weist auf seiner dem Rohr abgewandten Außenfläche eine konische Anlagefläche AF auf. An der Überwurfmutter ist dem Rohr bzw. dem Klemmring zuweisend eine gleichfalls konische Gegenfläche GF ausgebildet. Bei der skizzierten Klemmstellung liegen Anlagefläche AF und Gegenfläche GF aneinander an und eine auf das Rohr ausziehend wirkende Kraft, veranschaulicht durch den Pfeil FA, bewirkt einen achsialen Andruck der Anlagefläche an die Gegenfläche und daraus resultierend eine radiale Klemmung des Rohres in dem Klemmring KR. Der Klemmring KR ist an einer Stelle seines Umfangs geschlitzt, so dass er sich in geringem Maße radial erweitern bzw. verengen kann. Der Klemmring ist auf den Außendurchmesser des Rohres abgestimmt und weist im entspannten Zustand einen geringfügig kleineren Innendurchmesser auf als das Rohr RO, so dass beim Einstecken des Rohres der Klemmring geringfügig aufgeweitet wird und mit geringer elastischer Vorspannung an der Außenwand des Rohres anliegt. Hierdurch wird der Ring bei ausziehender Bewegung zuverlässig in Pfeilrichtung der ausziehenden Kraft mit bewegt und legt sich bei einem Ausziehversuch mit seiner Anlagefläche AF an die Gegenfläche GF, wodurch die radiale Klemmung des Rohres erzielt wird. Der Klemmring KR ist vorteilhafterweise gegenüber dem Grundkörper GK drehgesichert gelagert, wofür im skizzierten Beispiel ein Hattestift ST im Grundkörper GK verankert ist und in den Schlitz SZ des Klemmrings eingreift. Insoweit stimmt die in Fig. 1 skizzierte Vorrichtung im wesentlichen noch mit aus dem Stand der Technik bekannten Vorrichtungen überein.

Wesentlich bei der vorliegenden Erfindung ist, dass an dem Klemmring oder drehfest mit diesem verbunden und zur Überwurfmutter UW hin ragend eine Struktur auf, welche gegenüber einer senkrecht zur Längsachse LA liegenden Referenzebene in achsialer Richtung Vorsprünge und/oder Vertiefungen auf weist. Im skizzierten Beispiel ist diese Reliefstruktur SR gebildet durch vom Kreisring KR radial nach außen ragende Kreisringsegmente KV, welche durch Lücken KL voneinander beabstandet sind.

An der Überwurfmutter oder drehfest mit dieser verbunden ist radial mit der Struktur SR des Klemmrings überlappende Gegenstruktur SG ausgebildet, welche gleichfalls ein Relief mit gegenüber seiner senkrecht zur Längsachse LA liegenden Ebene Vorsprünge und/oder Vertiefungen aufweist. Die Stirnflächen der Struktur SR und der Gegenstruktur SG sind achsial einander zugewandt und die Strukturen greifen derart ineinander, dass in der in Fig. 1 skizzierten Klemmstellung die Stirnflächen von Strukturen und Gegenstrukturen nicht aneinander anliegen und deshalb die beiden Reliefstrukturen die achsiale Bewegung des Klemmrings, insbesondere in Richtung des flächigen Anliegens von Anlagefläche AF an der Gegenfläche GF nicht behindern. In dem skizzierten bevorzugten Ausführungsbeispiel weist die Gegenstruktur SG von einer Ring-schulter in achsialer Richtung zu der Reliefstruktur SR am Klemmring hin vorspringende Nocken NO auf, welche in der in Fig. 1 skizzierten Klemmstellung zwischen den Vorsprüngen KV des Klemmrings in den diese trennenden Lükken KL liegen. Die relative Lage der Strukturen mit den Vorsprüngen KV und Lücken KL einerseits und der Gegenstruktur- mit den Nocken NO andererseits ist anschaulich auch in der Abwicklung der Strukturen und Gegenstrukturen nach Fig. 2 und in der achsialen Ansicht nach Fig. 3 ersichtlich.

Zusätzlich kann ein Federring FS, beispielsweise in gewellter Form zwischen Grundkörper und Klemmring eingefügt sein, um diesen vorgespannt in Richtung des flächigen Anliegens von Anlagefläche AF und Gegenfläche GF zu drücken. Der Klemmring kann aber auch mit achsialem Spiel zwischen Überwurfmutter und Grundkörper liegen, so dass die verstärkte radiale Klemmung aus dem flächigen Anliegen von Anlagefläche AF und Gegenfläche GF erst bei dem Versuch, das Rohr aus der Vorrichtung auszuziehen, wirksam wird.

Die Struktur SR am Klemmring und die Gegenstruktur SG an der als Spannkörper dienenden Überwurfmutter UW sind ferner relativ zueinander um die Längsachse LA verdrehbar und dabei so gestaltet, dass in einer zweiten, in Fig. 4 bis Fig. 6 skizzierten Lösestellung die Stirnflächen der beiden Reliefstrukturen einen achsialen Abstand von Anlagefläche AF des Klemmrings und Gegenfläche GF der Überwurfmutter erzwingen und einhalten, so dass kein flächiges Anliegen ermöglicht wird und auch die daraus resultierende radiale Klemmung des Klemmrings nicht eintritt. Zumindest bei einer auf das Rohr ausziehend wirkenden Kraft liegen die einander zuweisenden Stirnflächen der Vorsprünge KV der Struktur SR und der Nocken NO der Gegenstruktur SG aneinander an. Die Nocken NO liegen in einer solchen Lösestellung überlappend in achsialer Richtung über den Vorsprüngen KV, was wieder in der Abwicklung nach Fig. 5 und der achsialen Ansicht nach Fig. 6 anschaulich ersichtlich ist. Vorzugsweise ist die Verdrehbarkeit der Gegenstruktur SG relativ zu der Struktur SR .um die Längsachse LA durch Anschläge begrenzt, so dass die in Fig. 2 und Fig. 3 skizzierte zweite Stellung und die in Fig. 5 und Fig. 6 skizzierte erste Stellung jeweils durch Anschläge.begrenzte Endstellungen der relativen Drehbewegung darstellen. Im skizzierten Beispiel sind die Strukturen Gegenstruktur jeweils dreizählig drehsymmetrisch, d. h. in Winkelabständen von 120° wiederholend ausgeführt. Die relative Verdrehung zwischen Strukturen Gegenstruktur beträgt dann vorteilhafterweise ca. 60°. Die dreizählige Drehsymmetrie ist durch die über den Umfang gleich verteilte dreifache Abstützung bei der in Fig. 5 und Fig. 6 skizzierten ersten Stellung besonders vorteilhaft.

Die Verdrehsicherung des Klemmrings KL und/oder der Struktur SR kann auch anstelle des Haltestiftes SZ durch formschlüssiges Ineinandergreifen der Struktur SR direkt oder indirekt in den Grundkörper GK gegeben sein. Der Spannkörper ist im skizzierten Beispiel als Überwurfmutter UW dargestellt, kann aber auch in anderer Weise ausgeführt sein, beispielsweise aufgeschnappt oder mit einer Bajonettverriegelung über einen geringen Winkelbereich aufgedreht sein. Der Spannkörper dient primär als Abstützung des Klemmkörpers in radialer Richtung durch Anliegen der Anlagefläche AF an der Gegenfläche GF in der Klemmstellung bzw. der Stirnflächen von Struktur und Gegenstruktur in der Lösestellung nach Fig. 4 bis Fig. 6. Der Spannkörper dient vorteilhafterweise zugleich als Handhabe zur Verdrehung der Gegenstruktur SG relativ zur Struktur SR, was prinzipiell auch auf andere Weise erfolgen kann.

## Patentansprüche

1. Rohrverbindungsvorrichtung mit einem Grundkörper und einem relativ zu diesem beweglichen Spannkörper sowie einem das Rohr umgebenden und zwischen Grundkörper und Spannkörper eingefügten Klemmring, welcher in einer Klemmstellung mit einer konischen Anlagefläche an einer konischen Gegenfläche von Grundkörper oder Spannkörper anliegt, **dadurch gekennzeichnet, dass** Lösevorrichtungen vorgesehen sind, welche in einer ersten Stellung eine flächige Anlage der beiden konischen Flächen verhindern und in einer zweiten Stellung ermöglichen.

2. Vorrichtung nach Anspruch 1, **dadurch gekennzeichnet, dass** Anlagefläche und Gegenfläche relativ zueinander um die Rohrlängsachse verdrehbar sind.

3. Vorrichtung nach Anspruch 1 oder 2, **dadurch gekennzeichnet, dass** die Gegenfläche an dem Spannkörper ausgebildet ist.

4. Vorrichtung nach einem der Ansprüche 1 bis 3, **dadurch gekennzeichnet, dass** der Spannkörper relativ zum Grundkörper drehbar ist.

5. Vorrichtung nach Anspruch 4, **dadurch gekennzeichnet, dass** der Spannkörper eine auf dem Grundkörper aufschraubbare Überwurfmutter mit einer zentralen Öffnung für das Rohr enthält.

6. Vorrichtung nach einem der Ansprüche 1 bis 5, **dadurch gekennzeichnet, dass** der Klemmring formschlüssig gegen ein Mitdrehen mit der Gegenfläche bei einer relativen Verdrehung von Spannkörper und Grundkörper lagegesichert ist.

7. Vorrichtung nach einem der Ansprüche 1 bis 6, **dadurch gekennzeichnet, dass** die Lösevorrichtungen einander achsial zuweisende erste und zweite Stirnflächen aufweisen, welche relativ zueinander verdrehbar sind und durch achsiale Vorsprünge und/oder Vertiefungen derart strukturiert sind, dass durch relative Verdrehung der beiden Stirnflächen um die Rohrlängsachse in einer ersten Stellung ein flächiges Anliegen der konischen Anlagefläche an der Gegenfläche verhindert und in einer zweiten Stellung ermöglicht ist.

8. Vorrichtung nach Anspruch 7, **dadurch gekennzeichnet, dass** eine erste Stirnfläche an dem Klemmring oder an einem mit dem Grundkörper drehfest verbundenen Ring ausgebildet ist.

9. Vorrichtung nach Anspruch 7 oder 8, **dadurch gekennzeichnet, dass** eine zweite Stirnfläche an einem relativ zum Grundkörper verdrehbaren Spannkörper oder einem weiteren Drehring ausgebildet ist.

10. Vorrichtung nach einem der Ansprüche 7 bis 9, **dadurch gekennzeichnet, dass** der Drehwinkel zwischen erster und zweiter relativer Stellung der Stirnflächen keiner als 180°, insbesondere kleiner als 120°, vorzugsweise kleiner als 90° ist.

11. Vorrichtung nach einem der Ansprüche 7 bis 10, **dadurch gekennzeichnet, dass** die beiden Stirnflächen in der ersten Stellung an wenigstens drei um die Rohrlängsachse winkelversetzten und beabstandeten Stellen aneinan-der liegen.

12. Vorrichtung nach einem der Ansprüche 7 bis 11, **dadurch gekennzeichnet; dass** der Wechsel von der zweiten Stellung in die erste Stellung unter Überwindung einer Rückstellkraft erfolgt.

## Claims

1. Pipe connection device comprising a base element and a tightening element which is movable relative thereto, and also a clamping ring which surrounds the pipe, is inserted between the base element and tightening element and, in a clamping position, bears by way of a conical bearing surface against a conical mating surface of the base element or tightening element, **characterized in that** release devices are provided which prevent a planar bearing contact between the two conical surfaces in a first position and allow it in a second position.

2. Device according to Claim 1, **characterized in that** the bearing surface and mating surface can be rotated relative to one another about the pipe longitudinal axis.

3. Device according to Claim 1 or 2, **characterized in that** the mating surface is formed on the tightening element.

4. Device according to one of Claims 1 to 3, **characterized in that** the tightening element can be rotated relative to the base element.

5. Device according to Claim 4, **characterized in that** the tightening element comprises a union nut which can be screwed onto the base element and which has a central opening for the pipe.

6. Device according to one of Claims 1 to 5, **characterized in that** the clamping ring is positionally secured with positive locking against being rotated together with the mating surface during a relative rotation of the tightening element and base element.

7. Device according to one of Claims 1 to 6, **characterized in that** the release devices comprise first and second end faces which face one another axially, which can be rotated relative to one another and which are structured by means of axial projections and/or depressions in such a way that, through a relative rotation of the two end faces about the pipe longitudinal axis, a planar bearing contact between the conical bearing surface and the mating surface is prevented in a first position and allowed in a second position.

8. Device according to Claim 7, **characterized in that** a first end face is formed on the clamping ring or on a ring connected in a rotationally fixed manner to the base element.

9. Device according to Claim 7 or 8, **characterized in that** a second end face is formed on a tightening element which can be rotated relative to the base element or on a further rotary ring.

10. Device according to one of Claims 7 to 9, **characterized in that** the angle of rotation between the first and second relative positions of the end faces is less than 180°, in particular less than 120°, preferably less than 90°.

11. Device according to one of Claims 7 to 10, **characterized in that**, in the first position, the two end faces bear against one another at at least three spaced-apart points which are offset angularly around the pipe longitudinal axis.

12. Device according to one of Claims 7 to 11, **characterized in that** the change from the second position to the first position takes place while overcoming a restoring force.

## Revendications

1. Dispositif de raccord de tuyauterie comprenant un corps de base et un corps de serrage mobile par rapport à celui-ci, ainsi qu'un collier de serrage entourant le tuyau et inséré entre le corps de base et le corps de serrage, qui s'applique dans une position de serrage avec une surface d'appui conique contre une surface conjuguée conique du corps de base ou du corps de serrage, **caractérisé en ce que** des dispositifs de desserrage sont prévus, lesquels, dans une première position, empêchent une application à plat des deux surfaces coniques et dans une deuxième position, permettent cette application.

2. Dispositif selon la revendication 1, **caractérisé en ce que** la surface d'appui et la surface conjuguée peuvent tourner l'une par rapport à l'autre autour de l'axe longitudinal du tuyau.

3. Dispositif selon la revendication 1 ou 2, **caractérisé en ce que** la surface conjuguée est réalisée sur le corps de serrage.

4. Dispositif selon l'une quelconque des revendications 1 à 3, **caractérisé en ce que** le corps de serrage peut tourner par rapport au corps de base.

5. Dispositif selon la revendication 4, **caractérisé en ce que** le corps de serrage comprend un écrou d'accouplement pouvant être vissé sur le corps de base avec une ouverture centrale pour le tuyau.

6. Dispositif selon l'une quelconque des revendications 1 à 5, **caractérisé en ce que** le coller de serrage est fixé en position par engagement positif pour empêcher une rotation avec la surface conjuguée lors d'une rotation relative du corps de serrage et du corps de base.

7. Dispositif selon l'une quelconque des revendications 1 à 6, **caractérisé en ce que** les dispositifs de desserrage présentent des première et deuxième surfaces frontales tournées axialement l'une vers l'autre, qui peuvent tourner l'une par rapport à l'autre et qui sont structurées par des saillies et/ou des renfoncements axiaux de telle sorte qu'une rotation relative des deux surfaces frontales autour de l'axe longitudinal du tuyau dans une première position empêche une application à plat de la surface d'appui conique contre la surface conjuguée, et dans une deuxième position, permette cette application.

8. Dispositif selon la revendication 7, **caractérisé en ce qu'**une première surface frontale est réalisée sur le collier de serrage ou sur une bague connectée de manière solidaire en rotation au corps de base.

9. Dispositif selon la revendication 7 ou 8, **caractérisé en ce qu'**une deuxième surface frontale est réalisée sur le collier de serrage ou sur une bague connectée de manière solidaire en rotation au corps de base.

10. Dispositif selon l'une quelconque des revendications 7 à 9, **caractérisé en ce que** l'angle de rotation entre la première et la deuxième position relative des surfaces frontales est inférieur à 180°C, en particulier inférieur à 120°, de préférence inférieur à 90°.

11. Dispositif selon l'une quelconque des revendications 7 à 10, **caractérisé en ce que** les deux surfaces frontales s'appliquent l'une contre l'autre dans la première position en au moins trois positions décalées angulairement et espacées autour de l'axe longitudinal du tuyau.

12. Dispositif selon l'une quelconque des revendications 7 à 11, **caractérisé en ce que** le passage de la deuxième position dans la première position s'effectue en surmontant une force de rappel.
